# EUROPÄISCHE PATENTSCHRIFT

(11) **EP 1 272 970 B1**
(45) Veröffentlichungstag und Bekanntmachung des Hinweises auf die Patenterteilung: **06.10.2004**
(21) Anmeldenummer: 01931570.4
(22) Anmeldetag: 05.04.2001
(51) Int. Cl.: G06K 9/38, G06K 9/40

(54) **VERFAHREN UND VORRICHTUNG ZUR AUTOMATISCHEN ZEICHENERKENNUNG**
AUTOMATIC CHARACTER RECOGNITION METHOD AND DEVICE
PROCEDE ET DISPOSITIF DE RECONNAISSANCE AUTOMATIQUE DE CARACTERES

(30) Priorität: 06.04.2000 DE 10017081
(43) Veröffentlichungstag der Anmeldung: 08.01.2003
(73) Patentinhaber: CGK Computer Gesellschaft Konstanz mbH, 78467 Konstanz (DE)
(72) Erfinder: HUND, Martin, 78476 Allensbach (DE)
(74) Vertreter: Schaumburg, Thoenes, Thurn, Landskron Patentanwälte
(86) Internationale Anmeldenummer: PCT/EP2001/003905
(87) Internationale Veröffentlichungsnummer: WO 2001/077998

(56) Entgegenhaltungen:
- WO-A-95/24278
- US-A- 4 185 271
- US-A- 6 035 059

## Beschreibung

Die Erfindung betrifft ein Verfahren zur automatischen Zeichenerkennung und eine Vorrichtung zur automatischen Zeichenerkennung.

Bei bekannten Verfahren beziehungsweise Vorrichtungen zur automatischen Zeichenerkennung wird in der Regel vor dem eigentlichen Kennungsprozess eine Trennung zwischen Nutzund Störinformation durchgeführt. Dabei wird eine die zu erkennenden Zeichen umfassende Bildfläche in eine Vielzahl von zeilen- und spaltenweise angeordneten Pixeln unterteilt und jedes Pixel entweder einer den zu erkennenden Zeichen zuzurechnenden Nutzinformation oder einer zu unterdrückenden Störinformation zugeordnet. Auf diese Weise wird etwa eine dunkle Schrift von einem hellen Hintergrund separiert, was im einfachsten Fall durch eine Binarisierung geschieht. Die Entscheidung, ob ein Pixel unterdrückt oder beibehalten, das heißt der den zu erkennenden Zeichen zuzurechnenden Nutzinformation zugeordnet werden soll, wird aufgrund der Farbe des Pixels entschieden, wobei bei jeder Zuordnung jeweils nur ein Bildpunkt betrachtet wird.

Bei den bekannten Verfahren beziehungsweise Vorrichtungen ergeben sich jedoch Probleme, wenn der Hintergrund der zu erkennenden Zeichen farbig bedruckt ist. Bei Formularen sind zum Beispiel Ausfüllhinweise häufig farbig bedruckt und der auszufüllende Bereich durch einen farbigen Rahmen markiert. Die Farbe, die zum Ausfüllen der Formulare verwendet wird, ist in der Regel nicht definiert. Eine Trennung von Schrift und Hintergrund durch eine einfache Binarisierung ist dann nicht möglich. Handelt es sich bei der Bildfläche zum Beispiel um einen grün gefärbten Hintergrund mit grauen Schriftzeichen, so müssen die vorhandenen grünen Pixel des Hintergrundes aufgrund ihrer Farbe der Störinformation zugeordnet werden. Damit diese Farbfilterung auch auf verschiedenen Druckqualitäten des Formulars funktioniert, muss unter Berücksichtigung der Schwankungen der Druckqualität und Papierfarbe ein entsprechender Toleranzbereich in den Farbfilter eingerechnet werden, so dass der Bereich der zu filternden Farben um diesen Toleranzbereich vergrößert werden muss. Teilweise ergeben sich jedoch exakt die gleichen Farben durch Farbmischung der grauen Bedruckung mit der grünen Hintergrundfarbe, so dass zwangsläufig Bildpunkte, die zu den grauen Schriftzeichen gehören, dem Hintergrund zugeordnet werden.

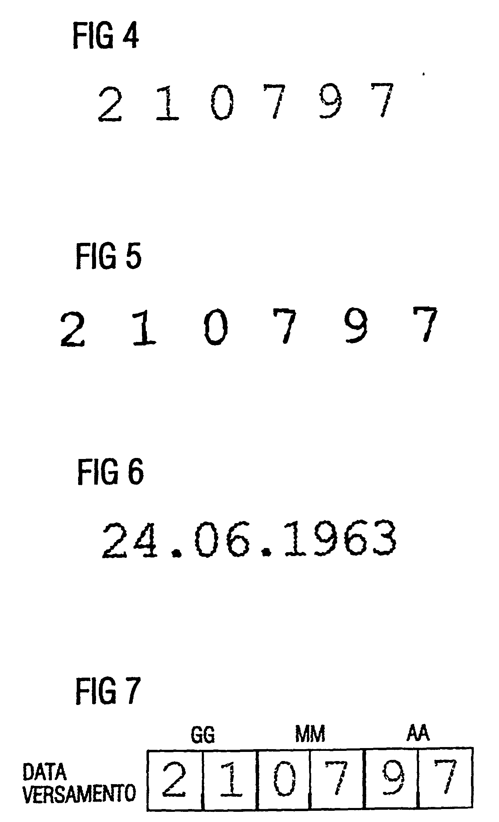

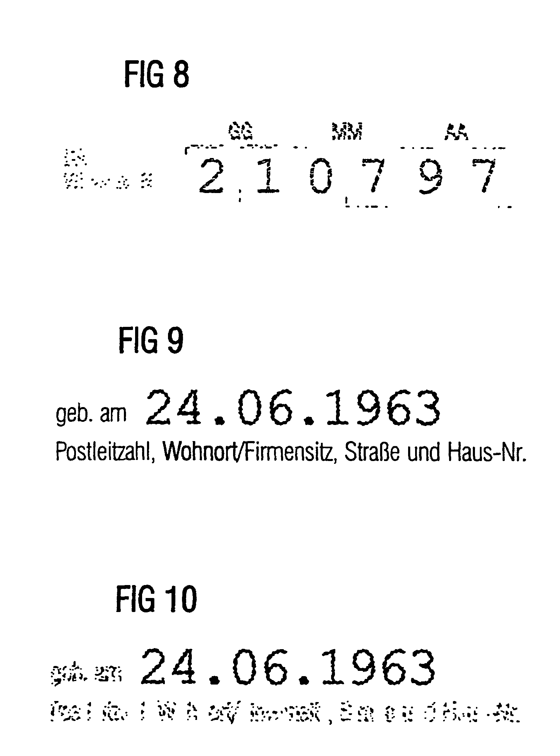

Zur Verdeutlichung ist in Fig. 7 das Original einer Bildfläche mit auf einem Hintergrund angeordneten Schriftzeichen dargestellt, wobei angenommen werden soll, dass der Hintergrund eine andere Färbung als die Schriftzeichen besitzt. Fig. 8 zeigt das Ergebnis der bekannten Farbfilterung nach einer Binarisierung. Obwohl nicht einmal alle Pixel des Hintergrundes unterdrückt wurden, ergibt sich bereits eine starke Ausdünnung der Schriftzeichen.

Ein weiteres Beispiel ist in den Figuren 9 und 10 dargestellt. Fig. 10 zeigt das Ergebnis der bekannten Farbfilterung nach einer Binarisierung, welche auf die in Fig. 9 gezeigte Bildfläche angewandt wurde. Auch hier zeigt sich, dass eine saubere Trennung von Vorder- und Hintergrund mittels der bekannten Verfahren bzw. Vorrichtungen nicht möglich ist.

Die EP-A-0 449 380 beschreibt ein Verfahren zur automatischen Zeichenerkennung, wobei jedes Pixel innerhalb einer Bildfläche daraufhin untersucht wird, ob es einer Nutzinformation oder einer Störinformation zugeordnet werden kann. In die Untersuchung werden die ein zentrales Pixel umgebenden benachbarten Pixel mit einbezogen.

Aus der DE-A-198 28 396 ist ein Verfahren zum Verarbeiten von Bilddaten bekannt, bei dem ein Bildbereich eines Formulars rasterartig abgetastet wird. Für jeden Bildpunkt werden die Größen Farbton, Sättigung und Helligkeit ermittelt. Mithilfe der Fuzzy-Technik werden Zugehörigkeiten der Bildpunkte zu Farbklassen ermittelt und dem jeweiligen Bildpunkt ein Grauwert zugeordnet.

Die DE-A-44 45 386 und die DE-A-195 17 178 betreffen Verfahren zur Bereinigung von Hintergrundinformationen bei elektronisch abgetasteten Bildern. Bei der Beurteilung, ob ein Bildelement einer Nutzinformation oder einer Hintergrundinformation zuzuordnen ist, werden auch benachbarte Bildelemente ausgewertet.

Aus der US-A-4 185 270 ist ein Verfahren zum automatischen Zeichenerkennen bekannt, bei dem ein von einem Scanner erfaßtes Bild in zwei verschiedene Binärbilder übergeführt wird. Für das erste Binärbild wird eine relativ hohe Schwelle beim Filtern angesetzt, so daß in diesem Binärbild mit hoher Sicherheit keine Schmutzpartikel mehr wiedergegeben werden. Dabei wird berücksichtigt, daß die zu extrahierenden Schriftzeichen bereits ausgedünnt werden, also auch wertvolle Nutzinformation verlorengegangen ist. Für das zweite Binärbild wird eine deutlich niedrigere Schwelle angesetzt, so daß in diesem Bild mit hoher Sicherheit sämtliche Schriftzeichen enthalten sind, jedoch auch zusätzliche Störpixel. In einem anschließenden aufwendigen Interpolationsmechanismus wird aus dem ersten Binärbild und dem zweiten Binärbild ein Optimalbild für die Zeichenerkennung berechnet.

Aus der WO 95-24278 A ist ein Verfahren zum Detektieren von Adreßaufklebern auf Postpaketen bekannt. Zur Zeichenerkennung erfolgt aufgrund der Farbinformation und der Nachbarschaftspixel eine Einteilung in Vordergrund und Hintergrund. Es erfolgt eine Untersuchung von Nachbarschaftspixel.

Aufgabe der vorliegenden Erfindung ist es, ein Verfahren zur automatischen Zeichenerkennung und eine Vorrichtung zur automatischen Zeichenerkennung zu schaffen, mittels derer die Trennung der zu erkennenden Zeichen von einem Hintergrund verbessert wird.

Diese Aufgabe wird für ein Verfahren durch die Merkmale des Anspruchs 1 und für eine Vorrichtung durch die Merkmale des Anspruchs 16 gelöst.

Bei der Erfindung erfolgt die Zuordnung der jeweiligen Pixel zu Nutz- oder Störinformation nicht nur aufgrund der Farbe des Pixels sondern basierend auf einem definierten Umfeld des jeweiligen Pixels vorgenommen wird, kann auch dann noch eine saubere Trennung von Vorder- und Hintergrund erfolgen, wenn teilweise die gleichen Mischfarben bei den zu erkennenden Schriftzeichen und der Hintergrundbedruckung auftreten. Infolgedessen wird eine optimale Unterdrückung des Hintergrundes erreicht und gleichzeitig eine Ausdünnung der zu erkennenden Schriftzeichen vermieden, so dass die Qualität der automatischen Zeichenerkennung verbessert wird.

Eine vorteilhafte Ausgestaltung des erfindungsgemäßen Verfahrens ist dadurch gekennzeichnet, dass als Umgebungsbereich eine quadratische Suchmatrix mit ungerader Zeilenund Spaltenzahl gewählt wird, wobei sich bei jeder Zuordnung das jeweils zuzuordnende Pixel im Zentrum der Suchmatrix befindet. Eine solche Suchmatrix läßt sich schrittweise in Zeilen- und Spaltenrichtung über die zu betrachtende Bildfläche führen, wobei jedes Pixel einmal zum Mittelpunkt des durch die Suchmatrix gebildeten Äbtastfensters wird.

Eine vorteilhafte Ausgestaltung des erfindungsgemäßen Verfahrens ist dadurch gekennzeichnet, dass die Zeilen- und Spaltenzahl der Suchmatrix ein in Bezug auf die Zeilenund Spaltenzahl der Bildfläche gewählt wird, wodurch die Verarbeitungsgeschwindigkeit bei der Untersuchung der innerhalb der Suchmatrix angeordneten Pixel erhöht wird.

Eine vorteilhafte Ausgestaltung des erfindungsgemäßen Verfahrens ist dadurch gekennzeichnet, dass bei jeder Zuordnung jedes der innerhalb der Suchmatrix angeordneten Pixel einem Hintergrundbereich, einem Toleranzbereich oder einem Zeichenbereich zugeteilt werden, wobei die Bereiche durch Unterteilung eines vorbestimmten Farbraums erhalten werden. Auf diese Weise wird eine differenzierte Bewertung der Pixel hinsichtlich ihrer Zugehörigkeit zum Hintergrund der Bildfläche ermöglicht, wobei die genauen Kriterien für die Zuordnung je nach Problemstellung definiert werden können.

Eine vorteilhafte Ausgestaltung des erfindungsgemäßen Verfahrens ist dadurch gekennzeichnet, dass bei jeder Zuordnung jedes der innerhalb der Suchmatrix angeordneten Pixel einen Hintergrundbereich, einen Toleranzbereich, einen Zeichenbereich oder einen Vordergrundbereich zugeteilt werden, wobei die Bereiche durch Unterteilung eines vorbestimmten Farbraums erhalten werden. Die zusätzliche Bildung eines Vordergrundbereichs in dem vorbestimmten Farbraum ermöglicht neben der Unterdrückung des Hintergrundes zusätzlich ein direktes Herauslösen des Vordergrundes, das heißt der zu erkennenden Zeichen, aus der betrachteten Bildfläche.

Eine vorteilhafte Ausgestaltung des erfindungsgemäßen Verfahrens ist dadurch gekennzeichnet, dass dem Hintergrundbereich solche Farben zugeteilt werden, die keine Mischfarben zu einer in den zu erkennenden Zeichen enthaltenen Farbe darstellen. Auf diese Weise lassen sich solche Pixel einordnen, die mit Sicherheit zum Hintergrund der Bildfläche gehören.

Eine vorteilhafte Ausgestaltung des erfindungsgemäßen Verfahrens ist dadurch gekennzeichnet, dass dem Toleranzbereich solche Farben zugeteilt werden, dessen Sättigungsund Helligkeitswerte in einem vorbestimmten Schwankungsbereich um den Hintergrundbereich liegen. Hierdurch läßt sich bei der Untersuchung der innerhalb der Suchmatrix befindlichen Pixel eine gegenüber einer losen Binarisierung differenziertere, je nach Problemstellung definierbare Einteilung der Pixel vornehmen. Der Toleranzbereich kann beispielsweise Sättigungsschwankungen um ±10% und Helligkeitsschwankungen um ±5% umfassen.

Eine vorteilhafte Ausgestaltung des erfindungsgemäßen Verfahrens ist dadurch gekennzeichnet, dass dem Zeichenbereich solche Farben zugeteilt werden, die weder dem Hintergrundbereich noch dem Toleranzbereich angehören. Hierdurch lassen sich solche Pixel einstellen, die außerhalb der den Toleranzbereich definierenden Sättigungs- und Helligkeitsschwankungen liegen.

Eine vorteilhafte Ausgestaltung des erfindungsgemäßen Verfahrens ist dadurch gekennzeichnet, dass dem Vordergrundbereich solche Farben zugeteilt werden, die nur in den zu erkennenden Zeichen enthalten sind. Auf diese Weise lassen sich solche Pixel einteilen, die mit Sicherheit nicht zum Hintergrund gehören, wodurch ein direktes Herauslösen solcher Farben in den zu erkennenden Zeichen ermöglicht wird.

Die Erfindung nach den Ansprüchen 1 und 16 ist dadurch gekennzeichnet, dass bei jeder Zuordnung das jeweils im Zentrum der Suchmatrix befindliche Pixel der Störinformation zugeordnet wird, wenn entweder
- das Pixel dem Hintergrundbereich zugeteilt wurde,
- das Pixel dem Toleranzbereich und wenigstens eines seiner unmittelbaren Nachbarpixel dem Hintergrundbereich zugeteilt wurden, oder wenn
- das Pixel dem Toleranzbereich und wenigstens eines der innerhalb der Suchmatrix befindlichen Pixel dem Hintergrundbereich zugeteilt wurden und sämtliche auf wenigstens einer vorbestimmten Verbindungslinie zwischen diesen Pixeln angeordnete Pixel entweder dem Hintergrundbereich oder dem Toleranzbereich zugeteilt wurden. Hierdurch wird eine möglichst effektive Analyse der jeweils innerhalb der Suchmatrix befindlichen Pixel und damit eine möglichst zuverlässige Zuordnung des im Zentrum der Suchmatrix befindlichen Pixels zur Störinformation oder zur Nutzinformation erreicht.

Eine vorteilhafte Ausgestaltung des erfindungsgemäßen Verfahrens ist dadurch gekennzeichnet, dass bei jeder Zuordnung das jeweils im Zentrum der Suchmatrix befindliche Pixel der Nutzinformation zugerechnet wird, wenn das Pixel dem Vordergrundbereich zugeteilt wurde. Hierdurch lassen sich solche Pixel unmittelbar herauslösen, die mit Sicherheit nicht zum Hintergrund gehören. Auf diese Weise wird insbesondere bei relative dunklem Hintergrund und vergleichsweise schwachem Aufdruck der zu erkennenden Zeichen eine Ausdünnung der Zeichen weitgehend vermieden.

Eine vorteilhafte Ausgestaltung des erfindungsgemäßen Verfahrens ist dadurch gekennzeichnet, dass die Zuordnung eines Pixels zur Nutzinformation vorrangig zu einer Zuordnung zur Störinformation erfolgt. Auf diese Weise kann ein Schriftschutzmechanismus erreicht werden.

Eine vorteilhafte Ausgestaltung des erfindungsgemäßen Verfahrens ist dadurch gekennzeichnet, dass zu Beginn der Zeichenerkennung die Form und Länge der Verbindungslinien sowie die Größe der Suchmatrix festgelegt werden. Bei dieser Festlegung werden vielfältige Anpassungen an die jeweilige Problemstellung ermöglicht.

Eine vorteilhafte Ausgestaltung des erfindungsgemäßen Verfahrens ist dadurch gekennzeichnet, dass durch logische Verknüpfungen festgestellt wird, ob die auf der wenigstens einer vorbestimmten Verbindungslinie angeordneten Pixel dem Hintergrundbereich oder dem Toleranzbereich zugeteilt werden. Eine solche Ausgestaltung ist besonders einfach und kostengünstig realisierbar.

Eine vorteilhafte Ausgestaltung des erfindungsgemäßen Verfahrens ist dadurch gekennzeichnet, dass sämtliche zulässigen Verbindungslinien gleichzeitig überprüft werden. Das Prüfen aller zulässigen Verbindungslinien kann jedoch auch innerhalb eines Schiebetaktes erfolgen. Hierdurch läßt sich bei Verwendung moderner programmierbarer Bauelemente oder ASICs kostengünstig eine Verarbeitungsgeschwindigkeit bis in den Bereich von mehr als 100 MPixel/s erreichen.

Eine vorteilhafte Ausgestaltung des erfindungsgemäßen Verfahrens ist dadurch gekennzeichnet, dass jedes der Störinformation zugeordnete Pixel durch einen bekannten Hintergrundwert ersetzt wird. Auf diese Weise kann das erfindungsgemäße Verfahren als Vorverarbeitungsstufe zu einem Binarisierungsalgorithmus eingesetzt werden.

Eine vorteilhafte Ausgestaltung des erfindungsgemäßen Verfahrens ist dadurch gekennzeichnet, dass anhand der Zuordnung eines Pixels zu Nutz- oder Störinformation unmittelbar eine Binarisierung vorgenommen wird. Dies ermöglicht eine unmittelbare Ausnutzung des dem erfindungsgemäßen Verfahren zugrundeliegenden Klassifikationsmechanismus.

Die Erfindung wird nachstehend anhand von in den beigefügten Abbildungen dargestellten Ausführungsbeispielen näher erläutert. Es zeigen:
Fig. 1 ein Flussdiagramm eines erfindungsgemäßen Verfahrens zur automatischen Zeichenerkennung;
Fig. 2 eine auf einer Bildfläche positionierte Suchmatrix mit unterschiedlichen Bereichen zugeteilten Pixeln;
Fig. 3 eine Suchmatrix mit einer Auswahl möglicher Verbindungslinien;
Fig. 4 eine Bildfläche nach Anwendung einer ersten Ausführungsform des erfindungsgemäßen Verfahrens vor der Binarisierung;
Fig. 5 die Bildfläche aus Fig. 4 nach der Binarisierung;
Fig. 6 eine Bildfläche nach Anwendung einer zweiten Ausführungsform des erfindungsgemäßen Verfahrens nach der Binarisierung;
Fig. 7 ein Original einer mehrere Schriftzeichen umfassenden Bildfläche;
Fig. 8 die Bildfläche aus Fig. 7 nach Anwendung eines bekannten Verfahrens zur automatischen Zeichenerkennung;
Fig. 9 ein Original einer weiteren verschiedene Schriftzeichen umfassenden Bildfläche;
Fig. 10 die Bildfläche aus Fig. 9 nach Anwendung eines bekannten Verfahrens zur automatischen Zeichenerkennung.

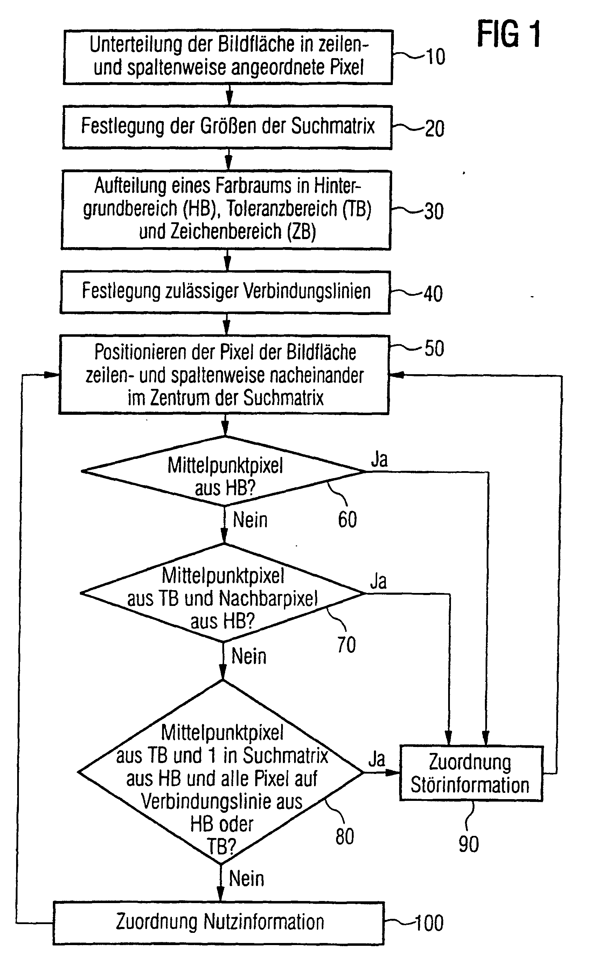

Gemäß Fig. 1 beginnt das erfindungsgemäße Verfahren zur automatischen Zeichenerkennung in einem ersten Schritt 10 mit einer Unterteilung einer die zu erkennenden Zeichen umfassenden Bildfläche in eine Vielzahl von zeilen- und spaltenweise angeordneter Pixel. Jedes dieser Pixel wird im Laufe des Verfahrens entweder einer den zu erkennenden Zeichen zuzurechnenden Nutzinformation oder einer zu unterdrückenden Störinformation zugeordnet.

Anschließend wird in einem Schritt 20 die Größe einer Suchmatrix festgelegt, welcher im Laufe des erfindungsgemäßen Verfahrens schrittweise in Zeilen- und Spaltenrichtung über den zu betrachtenden Bildbereich geführt wird. Bei der Suchmatrix handelt es sich um ein matrixartig aufgebautes Abtastfenster mit einer vorzugsweise zur Bildgröße vergleichsweise geringen Spalten- und Zeilenzahl, wodurch eine Optimierung der Verarbeitungsgeschwindigkeit der jeweils innerhalb der Suchmatrix angeordneten Pixel erreicht wird.

Anschließend wird in einem Schritt 30 ein beliebiger Farbraum (z. B. grau, RGB, HLS, YCRCB, LAB, YIQ, CMYK,...) einem von drei Bereichen zugeteilt. Hierbei werden einem ersten sogenannten Hintergrundbereich solche Farben zugeteilt, die mit Sicherheit zum Hintergrund und damit nicht zu den zu erkennenden Schriftzeichen der zu verarbeitenden Bildfläche zählen. Hierbei sind folglich solche Farben auszuschließen, die Mischfarben zwischen der Farbe des Hintergrundes und der Farbe der zu erkennender Schriftzeichen darstellen.

Einem sogenannten Toleranzbereich werden solche Farben zugeteilt, die in Bezug auf ihre Helligkeits- und Sättigungswerte innerhalb eines vorgegebenen Schwankungsbereichs um die Farben des Hintergrundes liegen. Beispielsweise können solche Farben dem Toleranzbereich zugeordnet werden, deren Sättigungswerte um nicht mehr als 10% und der Helligkeitswerte um nicht mehr als 5% von den Farben des Hintergrundbereichs abweichen.

Farben, die weder dem Hintergrund- noch dem Toleranzbereich zugeteilt wurden, werden dem sogenannten Zeichenbereich zugeteilt.

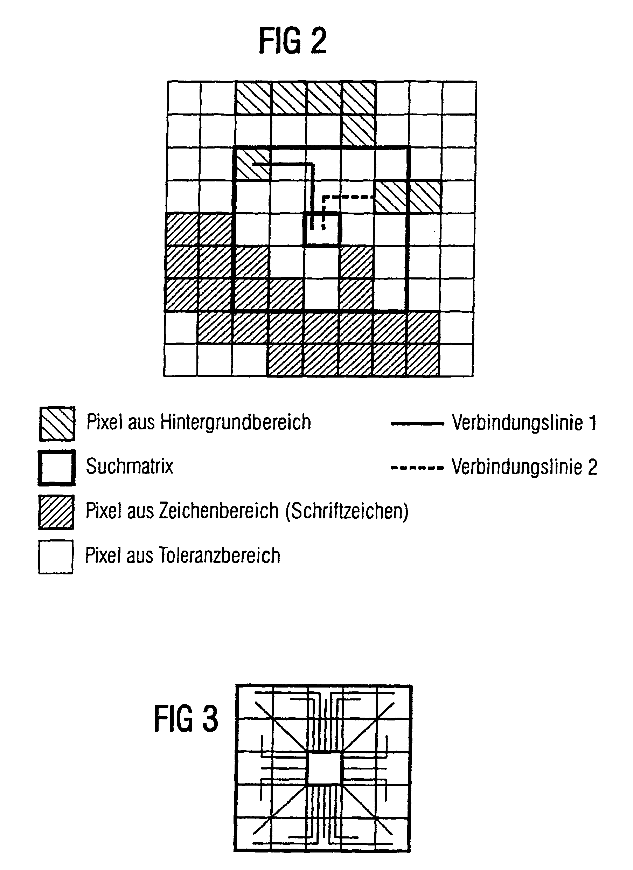

Je nach Zugehörigkeit der Pixel der Bildfläche zu den genannten drei Bereichen erfolgt anschließend in den Schritten 40 bis 100 des erfindungsgemäßen Verfahrens nach vorgegebenen Regeln, während die einzelnen Pixel der Bildfläche zeilen- und spaltenweise nacheinander im Zentrum der Suchmatrix positioniert werden, eine Zuordnung der einzelnen Pixel zur Nutz- oder Störinformation. Zur besseren Verdeutlichung ist in Fig. 2 und 3 ein Beispiel einer zu verarbeitenden Bildfläche sowie eine auf dieser positionierten Suchmatrix gezeigt, wobei die einzelnen Pixel gemäß Fig. 2 den genannten drei Bereichen zugeteilt wurden.

Zunächst werden in einem Schritt 40 zulässige Verbindungslinien festgelegt, die bei der nachfolgenden Anwendung der Regeln für die Zuordnung der Pixel zu Nutz- oder Störinformation verwendet werden, wie im Folgenden näher erläutert werden wird. Eine Auswahl möglicher Verbindungslinien am Beispiel einer 5x5 Suchmatrix ist in Fig. 3 dargestellt. Es können jedoch je nach Problemstellung beliebige andere Verbindungslinien definiert werden.

In einem nachfolgenden Schritt 50 wird zunächst ein Pixel der Bildfläche im Zentrum der Suchmatrix positioniert. In dem in Fig. 2 dargestellten Beispiel ist eine Suchmatrix mit einer Zeilen- bzw. Spaltenlänge von 5 Pixeln auf der Bildfläche positioniert, wobei dem Hintergrundbereich zugeteilte Pixel schraffiert, dem Toleranzbereich zugeteilte Pixel weiß und dem falschen Bereich zugeteilte Pixel schwarz dargestellt sind. Ferner sind mit einer durchgezogenen bzw. einer punktierten Linie zwei zulässige Verbindungslinien eingezeichnet. Jedesmal, wenn im Schritt 50 ein neues Pixel im Zentrum der Suchmatrix positioniert wird, wird dieses Pixel anhand der in den Schritten 60, 70 und 80 vorgesehenen Regeln entweder der zu unterdrückenden Störinformation in einem Schritt 90 oder der den zu erkennenden Zeichen zuzurechnenden Nutzinformation in einem Schritt 100 gemäß Fig. 1 zugeordnet, woraufhin zeilen- und spaltenweise das nächste Pixel im Zentrum der Suchmatrix positioniert wird.

Die Zuordnung des im Zentrum der Suchmatrix positionierten Pixels, im Folgenden Mittelpunktpixel genannt, erfolgt gemäß Fig. 1 folgendermaßen:
Zunächst wird in Schritt 60 abgefragt, ob das Mittelpunktpixel dem Hintergrundbereich angehört. Ist dies der Fall, so wird das Mittelpunktpixel als Hintergrund interpretiert, und folglich unmittelbar der zu unterdrückenden Störinformation zugeordnet.
Gehört das Mittelpunktpixel jedoch nicht dem Hintergrundbereich an, wird in Schritt 70 abgefragt, ob das Mittelpunktpixel dem Toleranzbereich angehört und ob außerdem wenigstens eines der unmittelbar benachbarten Pixel, von denen es insgesamt 8 gibt, dem Hintergrundbereich angehört. Wird dies bejaht, wird das Mittelpunktpixel ebenfalls der zu unterdrückenden Störinformation zugeordnet.
Ist dies jedoch nicht der Fall, sondern gehört das Mittelpunktpixel zwar zum Toleranzbereich, jedoch keines der unmittelbaren Nachbarpixel zum Hintergrundbereich, wie in dem in Fig. 2 dargestellten Ausführungsbeispiel der Fall ist, so wird mit Schritt 80 fortgefahren. In diesem Schritt wird abgefragt, ob das Mittelpunktpixel dem Toleranzbereich und wenigstens eines der innerhalb der Suchmatrix befindlichen Pixel dem Hintergrundbereich angehören. Letzteres ist bei dem in Fig. 2 dargestellten Beispiel für zwei Pixel der Fall, die Im Folgenden Zielpixel genannt werden. In diesem Falle werden für alle zulässigen Verbindungslinien, die in Schritt 40 festgelegt wurden, die auf der Verbindungslinie zwischen Mittelpunktpixel und dem jeweiligen Zielpixel angeordneten Pixel daraufhin überprüft, ob sie dem Hintergrundbereich oder dem Toleranzbereich angehören. Existiert wenigstens eine zulässige Verbindungslinie, bei der sämtliche Pixel zwischen Mittelpunktpixel und Zielpixel dem Hintergrundbereich oder dem Toleranzbereich zugehören, was sich durch einfache logische Verknüpfungen überprüfen läßt, dann wird das Mittelpunktpixel ebenfalls in Schritt 90 der zu unterdrückenden Störinformation zugeordnet. Ist dies jedoch nicht der Fall, wird das Mittelpunktpixel der den zu erkennenden Zeichen zuzurechnenden Nutzinformation in Schritt 100 zugeordnet. In beiden Fällen wird anschließend das nächste Pixel der Bildfläche im Zentrum der Suchmatrix positioniert und nach den gleichen Regeln der Schritte 60, 70 und 80 zugeordnet.
Dadurch, dass sich die maximale Länge und die Form der zulässigen Verbindungslinien sowie die Größe der Suchmatrix individuell festlegen lassen, sind vielfältige Anpassungen an die jeweilige Problemstellung möglich.
Die der zu unterdrückenden Störinformation zugeordneten Pixel können jeweils durch einen bekannten Hintergrundwert ersetzt werden, so dass das erfindungsgemäße Verfahren als Vorverarbeitungsstufe zu einem Binarisierungsalgorithmus einsetzbar ist. Das erfindungsgemäße Verfahren eignet sich jedoch durch seinen Klassifikationsmechanismus hinsichtlich der Trennung von Vordergrund und Hintergrund auch direkt zu einer Binarisierung auf farbigen Bildflächen.
In Fig. 4 ist das Ergebnis des erfindungsgemäßen Verfahrens dargestellt, welches auf die in Fig. 7 gezeigte Bildfläche angewandt wurde. Infolge der durch das erfindungsgemäße Verfahren erreichten umfeldbezogenen Trennung von Vorder- und Hintergrund wird eine Ausdünnung der zu erkennenden Schriftzeichen wirksam vermieden, wobei der gesamte Hintergrund unterdrückt wird. Infolge der differenzierten Einteilung der Pixel in die genannten drei Bereiche wird auch dann eine saubere Trennung von Vorder- und Hintergrund erreicht, wenn teilweise die gleichen Mischfarben bei dem Hintergrund einerseits und den zu erkennenden Schriftzeichen andererseits auftreten. Wie in Fig. 5 gezeigt ist, führt eine nachfolgenden Binarisierung zu einer korrekten Wiedergabe der zu erkennenden Schriftzeichen.
Das erfindungsgemäße Verfahren wurde in dem oben beschriebenen Ausführungsbeispiel zur Unterdrückung des Hintergrundes eingesetzt, kann jedoch alternativ auch zum direkten Herauslösen der zu erkennenden Zeichen oder zur Kombination von Unterdrückung des Hintergrunds und Herauslösen der zu erkennenden Zeichen eingesetzt werden, wie nachfolgend erläuterte wird.

In diesem Fall wird der Farbraum in Schritt 30 des in Fig. 1 dargestellten Flussdiagramms in vier statt in drei Bereiche aufgeteilt, wobei der vierte Bereich, der sogenannte Vordergrundbereich, solche Farben umfasst, die nur in den zu erkenenden Zeichen enthalten sind, also mit Sicherheit nicht zum Hintergrund gehören. Werden Pixel diesem Vordergrundbereich zugeteilt, so lassen sich diese Pixel unmittelbar entsprechend Schritt 100 der Nutzinformation zuordnen. Eine solche Zuordnungsregel läßt sich zusätzlich zu den Zuordnungsregeln in den Schritten 60, 70 und 80 in das Verfahren einbeziehen, um ein Unterdrücken des Hintergrundes der Bildfläche mit einem direkten Herauslösen des Vordergrundes zu verknüpfen. Eine solche Kombination ist insbesondere dann angebracht, wenn bei schwach gedruckten Schriftzeichen auf relativ dunklem Hintergrund eine starke Ausdünnung der Schriftzeichen verhindert werden soll.

Die Zuordnung zum Vordergrundbereich zwecks Herauslösen der Schriftzeichen kann jedoch auch gegenüber der Unterdrückung des Hintergrundes vorrangig behandelt werden, wodurch sich ein Schriftschutzmechanismus erreichen läßt.

In Fig. 6 ist das Ergebnis einer Anwendung des erfindungsgemäßen Verfahrens auf die in Fig. 9 dargestellte Bildfläche gezeigt, wobei wie oben beschrieben, eine Herauslösung des Vordergrundes und anschließend eine Binarisierung durchgeführt wurde. Auch hier zeigt sich eine saubere Trennung von Vorder- und Hintergrund infolge der erfindungsgemäßen, umfeldbezogenen Zeichenerkennung.

Das erfindungsgemäße Verfahren setzt sich sehr einfach und kostengünstig in einer Vorrichtung zur automatischen Zeichenerkennung realisieren. Für jede mögliche Farbe des Farbraums genügt ein zweibitbreiter Eintrag für die Klassifizierung im Hintergrundbereich, Toleranzbereich und Zeichenbereich. Die erforderliche Suchmatrix hat ebenfalls eine Tiefe von zwei Bit. Das Prüfen aller zulässigen Verbindungslinien kann gleichzeitig oder innerhalb eines Schiebetaktes erfolgen. Bei Verwendung moderner programmierbarer Bauelemente oder ASICs läßt sich hiermit eine Verarbeitungsgeschwindigkeit bis in den Bereich von mehr als 100 Mpixel/S erreichen. Mittels einfacher logischer Verknüpfungen läßt sich prüfen, ob eine zulässige zusammenhängende Verbindungslinie zwischen einem Mittelpunktpixel und einem Zielpixel die Voraussetzung für die Zuordnung zur Nutzinformation oder zu der zu unterdrückenden Störinformation erfüllt.

## Patentansprüche

1. Verfahren zur automatischen Zeichenerkennung,
bei dem eine die zu erkennenden Zeichen umfassende Bildfläche in eine Vielzahl zeilen- und spaltenweise angeordneter Pixel unterteilt und jedes Pixel entweder einer den zu erkennenden Zeichen zuzurechnenden Nutzinformation oder einer zu unterdrückenden Störinformation zugeordnet wird,
bei jeder Zuordnung jedes der innerhalb einer Suchmatrix angeordneten Pixel einem Hintergrundbereich, einem Toleranzbereich oder einem Zeichenbereich zugeteilt werden, wobei die Bereiche durch Unterteilung eines vorbestimmten Farbraumes erhalten werden,
und bei dem bei jeder Zuordnung das jeweils im Zentrum der Suchmatrix befindliche Pixel der Störinformation zugeordnet wird, wenn entweder
- das Pixel dem Hintergrundbereich zugeteilt wurde,
- das Pixel dem Toleranzbereich und wenigstens eines seiner unmittelbaren Nachbarpixel dem Hintergrundbereich zugeteilt wurden, oder wenn
- das Pixel dem Toleranzbereich und wenigstens eines der innerhalb der Suchmatrix befindlichen Pixel dem Hintergrundbereich zugeteilt wurden und sämtliche auf wenigstens einer vorbestimmten Verbindungslinie zwischen diesen Pixeln angeordnete Pixel entweder dem Hintergrundbereich oder dem Toleranzbereich zugeteilt wurden.

2. Verfahren nach Anspruch 1,
**dadurch gekennzeichnet, dass**
bei jeder Zuordnung das jeweils im Zentrum der Suchmatrix befindliche Pixel der Nutzinformation zugerechnet wird, wenn das Pixel dem Vordergrundbereich zugeteilt wurde.

3. Verfahren nach Anspruch 2,
**dadurch gekennzeichnet, dass**
die Zuordnung eines Pixels zur Nutzinformation vorrangig zu einer Zuordnung zur Störinformation erfolgt.

4. Verfahren nach einem der vorhergehenden Ansprüche,
**dadurch gekennzeichnet, dass**
zu Beginn die Form und Länge der zulässigen Verbindungslinien wie die Größe der Suchmatrix festgelegt wird.

5. Verfahren nach einem der vorhergehenden Ansprüche,
**dadurch gekennzeichnet , dass**
durch logische Verknüpfungen festgestellt wird, ob die auf der wenigstens einen vorbestimmten Verbindungslinie angeordnete Pixel entweder dem Hintergrundbereich oder dem Toleranzbereich zugeteilt werden.

6. Verfahren nach Anspruch 5,
**dadurch gekennzeichnet, dass**
sämtliche zulässige Verbindungslinien gleichzeitig überprüft werden.

7. Verfahren nach Anspruch 5,
**dadurch gekennzeichnet, dass**
sämtliche zulässige Verbindungslinien innerhalb eines Schiebetaktes überprüft werden.

8. Verfahren nach einem der vorhergehenden Ansprüche,
**dadurch gekennzeichnet, dass**
jedes der Störinformation zugeordnete Pixel durch einen bekannten Hintergrundwert ersetzt wird.

9. Verfahren nach einem der vorhergehenden Ansprüche,
**dadurch gekennzeichnet, dass**
anhand der Zuordnung eines Pixels zu Nutz- oder Störinformation unmittelbar eine Binarisierung vorgenommen wird.

10. Verfahren nach einem der vorhergehenden Ansprüche,
**dadurch gekennzeichnet, dass**
eine quadratische Suchmatrix ungerader Zeilen- und Spaltenzahl gewählt wird.

11. Verfahren nach Anspruch 10,
**dadurch gekennzeichnet, dass**
die Zeilen- und Spaltenzahl der Suchmatrix klein in Bezug auf die Zeilen- und Spaltenzahl der Bildfläche gewählt wird.

12. Verfahren nach einem der vorhergehenden Ansprüche,
**dadurch gekennzeichnet, dass**
dem Hintergrundbereich solche Farben zugeteilt werden, die keine Mischfarben zu einer in den zu erkennenden Zeichen enthaltenen Farbe darstellen.

13. Verfahren nach einem der vorhergehenden Ansprüche,
**dadurch gekennzeichnet, dass**
dem Toleranzbereich solche Farben zugeteilt werden, deren Sättigungs- und Helligkeitswerte in einem vorbestimmten Schwankungsbereich um Farben des Hintergrundbereichs liegen.

14. Verfahren nach Anspruch 13,
**dadurch gekennzeichnet, dass**
der Toleranzbereich Sättigungsschwankungen um ± 10% und Helligkeitschwankungen um ± 5% umfasst.

15. Verfahren nach einem der vorhergehenden Ansprüche,
**dadurch gekennzeichnet, dass**
dem Zeichenbereich solche Farben zugeteilt werden, die weder dem Hintergrundbereich noch dem Toleranzbereich zuzuteilen sind.

16. Vorrichtung zur automatischen Zeichenerkennung,
bei der eine Einrichtung zur Unterteilung einer die zu erkennenden Zeichen umfassenden Bildfläche in eine Vielzahl zeilen- und spaltenweise angeordneten Pixel, wobei jedes Pixel entweder eine den zu erkennenden Zeichen zuzurechnende Nutzinformation oder einer zu unterdrückenden Störinformation zuteilbar ist,
bei jeder Zuordnung jedes der innerhalb der Suchmatrix angeordneten Pixel einem Hintergrundbereich, einem Toleranzbereich oder einem Zeichenbereich zugeteilt werden, wobei die Bereiche durch Unterteilung eines vorbestimmten Farbraumes erhalten werden,
und bei der bei jeder Zuordnung das jeweils im Zentrum einer Suchmatrix befindliche Pixel der Störinformation zugeordnet wird, wenn entweder
- das Pixel dem Hintergrundbereich zugeteilt wurde,
- das Pixel dem Toleranzbereich und wenigstens eines seiner unmittelbaren Nachbarpixel dem Hintergrundbereich zugeteilt wurden, oder wenn
- das Pixel dem Toleranzbereich und wenigstens eines der innerhalb der Suchmatrix befindlichen Pixel dem Hintergrundbereich zugeteilt wurden und sämtliche auf wenigstens einer vorbestimmten Verbindungslinie zwischen diesen Pixeln angeordnete Pixel entwederdem Hintergrundbereich oder dem Toleranzbereich zugeteilt wurden.

## Claims

1. A method for the automatic character recognition,
in which an image area comprising the characters to be recognized is divided into a plurality of pixels arranged in lines and columns, and each pixel is assigned either to an item of useful information that is to be allocated to the characters to be recognized or to an item of disturbance information that is to be suppressed,
with each assignment, each of the pixels arranged within a search matrix, is assigned to a background area, a tolerance area or a character area, the areas being obtained by dividing a predetermined colour model,
and in which, with each assignment, the pixel present in the centre of the search matrix, is assigned to the item of disturbance information, if either
- the pixel was assigned to the background area,
- the pixel was assigned to the tolerance area and at least one of its directly neighbouring pixels was assigned to the background area, or if
- the pixel was assigned to the tolerance area and at least one of the pixels present within the search matrix was assigned to the background area and all pixels present on at least one predetermined connecting line between these pixels were assigned to either the background area or the tolerance area.

2. Method according to claim 1,
**characterized in that**
with each assignment, the respective pixel present in the centre of the search matrix is assigned to the item of useful information, when the pixel had been assigned to the foreground area.

3. Method according to claim 2,
**characterized in that**
the assignment of a pixel to the item of useful information is effected with priority to an assignment to an item of disturbance information.

4. Method according to one of the preceding claims,
**characterized in that**
at the beginning the shape and the length of the admissible connecting lines as well as the size of the search matrix are determined.

5. Method according to one of the preceding claims,
**characterized in that**
it is determined with the aid of logical operations whether the pixels arranged on the at least one predetermined connecting line are assigned to either the background area or the tolerance area.

6. Method according to claim 5,
**characterized in that**
all admissible connecting lines are checked simultaneously.

7. Method according to claim 5,
**characterized in that**
all admissible connecting lines are checked within a shift register clock pulse.

8. Method according to one of the preceding claims,
**characterized in that**
each pixel assigned to the item of disturbance information is replaced by a known background value.

9. Method according to one of the preceding claims,
**characterized in that**
on the basis of the assignment of a pixel to an item of useful information or an item of disturbance information a binarisation is performed.

10. Method according to one of the preceding claims,
**characterized in that**
a square search matrix having an odd number of lines and columns is selected.

11. Method according to claim 10,
**characterized in that**
the number of lines and columns of the search matrix is chosen small with respect to the number of lines and columns of the image area.

12. Method according to one of the preceding claims,
**characterized in that**
the background area is assigned such colours which do not represent a mixed colour to a colour contained in the characters to be recognized.

13. Method according to one of the preceding claims,
**characterized in that**
the tolerance area is assigned such colours, the saturation and brightness values of which are in a predetermined range of variation about colours of the background area.

14. Method according to claim 13,
**characterized in that**
the tolerance area comprises saturation fluctuations of ± 10% and brightness fluctuations of ± 5%.

15. Method according to one of the preceding claims,
**characterized in that**
the character area is assigned such colours which can neither be assigned to the background area nor to the tolerance area.

16. Device for the automatic character recognition,
in which means for dividing an image area comprising the characters to be recognized into a plurality of pixels arranged in lines and columns are provided, each pixel being assignable to either an item of useful information that is to be allocated to the characters to be recognized or to an item of disturbing information that is to be suppressed,
with each allocation, each pixel arranged within the search matrix being assigned to a background area, a tolerance area or a character area, the areas being obtained by dividing a predetermined colour model,
and in which, with each allocation, the pixel present in the centre of a search matrix is assigned to the item of disturbing information, if either
- the pixel was assigned to the background area,
- the pixel was assigned to the tolerance area and at least one of its directly neighbouring pixels was assigned to the background area, or if
- the pixel was assigned to the tolerance area and at least one of the pixels present within the search matrix was assigned to the background area and all pixels arranged on at least one predetermined connecting line between these pixels were assigned to either the background area or the tolerance area.

## Revendications

1. Procédé de reconnaissance automatique de caractères, dans lequel:
une surface d'image comportant les caractères à reconnaître est divisée en un grand nombre d'éléments d'image disposés en lignes et en colonnes, et chaque élément d'image est associé à une information utile à ajouter aux caractères à reconnaître ou bien à une information parasite à éliminer,
pour chaque association, chaque élément d'image disposé à l'intérieur d'une matrice de recherche est attribué à une zone de fond, une zone de tolérance ou bien une zone de caractères, lesdites zones étant obtenues en divisant un espace de couleur prédéterminé, et
pour chaque association, l'élément d'image se trouvant à chaque fois au centre de la matrice de recherche est attribué à l'information parasite lorsque soit
- l'élément d'image a été attribué à la zone de fond,
- l'élément d'image a été attribué à la zone de tolérance et au moins un de ses éléments d'image voisins immédiats a été attribué à la zone de fond, soit
- l'élément d'image a été attribué à la zone de tolérance et au moins un des éléments d'image se trouvant à l'intérieur de la matrice de recherche a été attribué à la zone de fond, et l'ensemble des éléments d'image, disposés sur au moins une ligne de liaison prédéterminée entre ces éléments d'image, a été attribué à la zone de fond ou à la zone de tolérance.

2. Procédé selon la revendication 1, **caractérisé en ce que**, pour chaque association, l'élément d'image se trouvant à chaque fois au centre de la matrice de recherche est ajouté à l'information utile lorsque l'élément d'image a été attribué à la zone de premier plan.

3. Procédé selon la revendication 2, **caractérisé en ce que** l'association d'un élément d'image à l'information utile est effectuée préalablement à une association à l'information parasite.

4. Procédé selon l'une des revendications précédentes, **caractérisé en ce que** l'on détermine, au début, la forme et la longueur des lignes de liaison permises, ainsi que la taille de la matrice de recherche.

5. Procédé selon l'une des revendications précédentes, **caractérisé en ce qu'**on détermine par une combinaison logique si les éléments d'image disposés sur au moins une ligne de liaison prédéterminée sont attribués à la zone de fond ou à la zone de tolérance.

6. Procédé selon la revendication 5, **caractérisé en ce que** l'ensemble des lignes de liaison permises est testé simultanément.

7. Procédé selon la revendication 5, **caractérisé en ce que** l'ensemble des lignes de liaison permises est testé à l'intérieur d'une fenêtre glissante.

8. Procédé selon l'une des revendications précédentes, **caractérisé en ce que** chaque élément d'image associé à l'information parasite est remplacé par une valeur de fond connue.

9. Procédé selon l'une des revendications précédentes, **caractérisé en ce que** l'on effectue directement une binarisation en se référant à l'association d'un élément d'image à une information utile ou parasite.

10. Procédé selon l'une des revendications précédentes, **caractérisé en ce qu'**une matrice de recherche quadratique est choisie avec un nombre impair de lignes et de colonnes.

11. Procédé selon la revendication 10, **caractérisé en ce que** le nombre de lignes et de colonnes de la matrice de recherche est choisi pour être faible par rapport au nombre de lignes et de colonnes de la surface d'image.

12. Procédé selon l'une des revendications précédentes, **caractérisé en ce qu'**il est attribué à la zone de fond des couleurs qui ne présentent aucune couleur mélangée par rapport à une couleur contenue dans les caractères à reconnaître.

13. Procédé selon l'une dès revendications précédentes, **caractérisé en ce qu'**il est attribué à la zone de tolérance des couleurs dont les valeurs de saturation et de luminosité se trouvent dans une zone de variation prédéterminée autour des couleurs de la zone de fond.

14. Procédé selon la revendication 13, **caractérisé en ce que** la zone de tolérance présente des variations de saturation de ±10%, et des variations de luminosité de ±5%.

15. Procédé selon l'une des revendications précédentes, **caractérisé en ce qu'**il est attribué à la zone de caractères des couleurs qui ne doivent être attribuées ni à la zone de fond, ni à la zone de tolérance.

16. Dispositif de reconnaissance automatique de caractères, dans lequel:
il est prévu un dispositif de division d'une surface d'image comportant des caractères à reconnaître en un grand nombre d'éléments d'image disposés en lignes et en colonnes, chaque élément d'image pouvant être attribué à une information utile à ajouter aux caractères à reconnaître ou bien à une information parasite à éliminer,
pour chaque association, chaque élément d'image disposé à l'intérieur d'une matrice de recherche est attribué à une zone de fond, une zone de tolérance ou bien une zone de caractères, lesdites zones étant obtenues en divisant un espace de couleur prédéterminé, et
pour chaque association, l'élément d'image se trouvant à chaque fois au centre de la matrice de recherche est attribué à l'information parasite lorsque soit
- l'élément d'image a été attribué à la zone de fond,
- l'élément d'image a été attribué à la zone de tolérance et au moins un de ses éléments d'image voisins immédiats a été attribué à la zone de fond, soit
- l'élément d'image a été attribué à la zone de tolérance et au moins un des éléments d'image se trouvant à l'intérieur de la matrice de recherche a été attribué à la zone de fond, et l'ensemble des éléments d'image, disposés sur au moins une ligne de liaison prédéterminée entre ces éléments d'image, a été attribué à la zone de fond ou à la zone de tolérance.
